# EUROPEAN PATENT APPLICATION

(11) **EP 2 658 297 A1**
(43) Date of publication of application: **30.10.2013**
(21) Application number: 12305481.9
(22) Date of filing: 27.04.2012
(51) Int. Cl.: H04W 8/20, H04W 12/06, H04W 8/24

(54) **Method and system for accessing a service**

(71) Applicant: Gemalto SA, 92190 Meudon (FR)
(72) Inventor: Zeamari, Ali, 13705 LA CIOTAT (FR); Balocco, Sébastien, 13705 LA CIOTAT (FR); Rade, Daniel, 13705 LA CIOTAT (FR); Franchi, Christophe, 13705 LA CIOTAT (FR)

(57) **Abstract**

The invention relates to a method 20 for accessing a service.

According to the invention, a first device 12 comprising or accessing a first memory, the first memory storing an identifier, as first identifier, the first memory storing data relating to at least one first subscription for accessing from the first device at least one communication network, as first subscription data, each of at least one second device 16 comprising or accessing a second memory, the second memory storing an identifier, as second identifier. The method comprises the following steps:
- each of the at least one second device sends to the first device the second identifier 28;
- the first device sends, thanks to the first subscription data, to a server 110 the first identifier and at least the second identifier 210 ;
- the server sends to the first device data 212 relating to at least one second subscription for accessing from the at least one second device the at least one communication network, as second subscription data; and
- the first device sends to the at least one second device the at least one second subscription data 214.

The invention also pertains to a corresponding system.

## Description

### Field of the invention:

The invention relates generally to a method for accessing a service. Furthermore, the invention also pertains to a system for accessing a service.

### State of the art:

Nowadays, a user tends to have more and more (electronic) devices, like a mobile phone, a mobile laptop, a Personal Computer (or PC), a tablet, a game console and so on. Each device is able to access a remote server, so as to benefit from one or several services.

Most of the time, a user who owns the mobile phone has only one (user) subscription to a network operator.

However, the user does not have any other subscription to a network operator for her/his other device(s).

There is a need to supply a solution that allows providing another subscription(s) to a network operator for another device(s) while being easy for the user and without needing to involve a person of the network operator.

### Summary of the invention:

The invention proposes a solution for satisfying the just herein above specified need by supplying a method for accessing a service.

According to the invention, a first device comprises or accesses a first memory, the first memory storing an identifier, as first identifier, the first memory storing data relating to at least one first subscription for accessing from the first device at least one communication network, as first subscription data. Each of at least one second device comprises or accesses a second memory, the second memory storing an identifier, as second identifier. The method comprises the following steps:
- each of the at least one second device sends to the first device the second identifier;
- the first device sends, thanks to the first subscription data, to a server the first identifier and at least the second identifier;
- the server sends to the first device data relating to at least one second subscription for accessing from the at least one second device the at least one communication network, as second subscription data; and
- the first device sends to the at least one second device the at least one second subscription data.

The principle of the invention consists in that a first device submits, thanks to first subscription data, over a communication network(s), to a server data relating to an identification of the first and a second device and, when the server identifies the first and second devices, the server issues, via the first device, to the second device data relating to a second subscription.

It is to be noticed that the use of the first subscription data is essential and is available from a first device that allows accessing a server so that another or other devices, as second device(s), also obtain data relating to one or several other subscription(s), as second subscription data.

Furthermore, the invention solution does not require any user intervention, so as to access second subscription data by using automatically first subscription data and device identification.

This is the second (or more) subscription data that allows the second device (or each other device) to access from the concerned second device, over one or several communication networks, a server.

Thus, the second device is able, thanks to received second subscription data, to access, over the communication network(s), one or several services accessible from or through a server.

According to a further aspect, the invention is a system for accessing a service.

According to the invention, the system comprises a first device and at least one second device. The first device comprises or accesses a first memory, the first memory storing an identifier, as first identifier, the first memory storing data relating to at least one first subscription for accessing from the first device at least one communication network, as first subscription data. Each of the at least one second device comprising or accessing a second memory, the second memory storing an identifier, as second identifier.

Each of the at least one second device is adapted to send to the first device the second identifier.

The first device is adapted to send, thanks to the first subscription data, to a server the first identifier and at least the second identifier.

The server is adapted to send to the first device data relating to at least one second subscription for accessing from at least the second device the at least one communication network, as second subscription data; and

The first device is adapted to send to the at least one second device the at least one second subscription data.

As to the first device, it may be a mobile phone or a token.

The first device may also include a portable device, such as a handheld computer, like a Personal Digital Assistant (or PDA), a palm-top computer, a PC, a Voice Over Internet Protocol (or VOIP) handset, a netbook, a tablet or a laptop computer.

As to the second device, it may be a camera.

The second device may also include a handset, a set-top box, a desktop computer, a PC, a media player, a game console, a tablet, a TeleVision (or TV) set or a token.

### Brief description of the drawings:

Additional features and advantages of the invention will be more clearly understandable after reading a detailed description of one preferred embodiment of the invention, given as an indicative and non-limitative example, in conjunction with the following drawings:

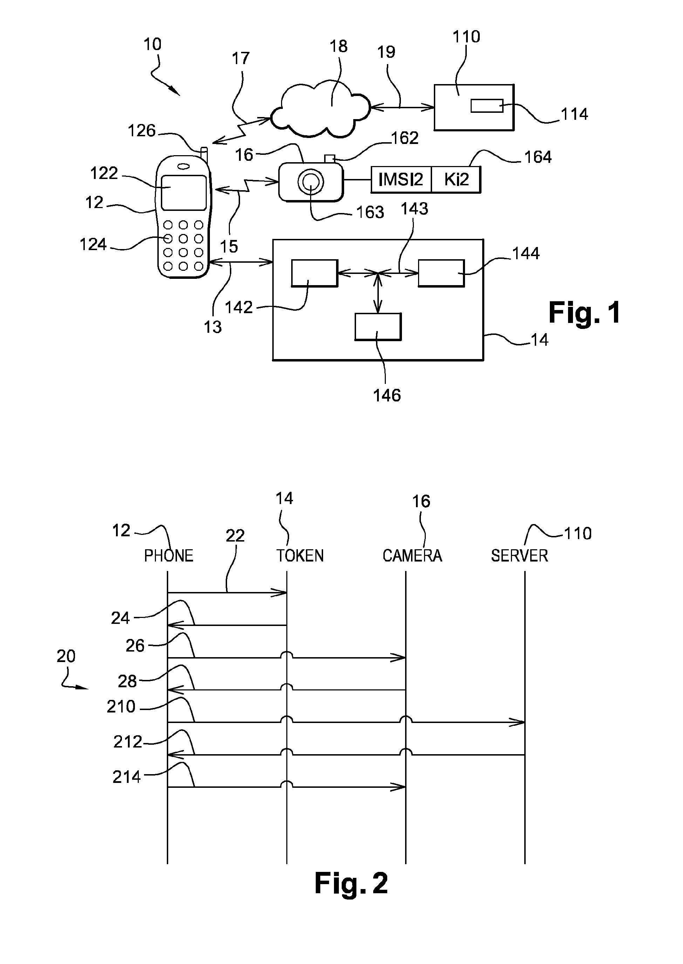

- Figure 1 illustrates a simplified diagram of one embodiment of a system for accessing a service by using a token coupled to a mobile phone, as first device, and a camera, as second device, to load into the second device data relating to a second subscription originating from a remote server thanks to data relating to a first subscription stored within the token, according to the invention; and
- Figure 2 represents an example of one message flow between notably the token, the first and second device and the remote server of figure 1, so that the first device submits data relating to a first subscription and device identifiers, gets data relating to a second subscription and sends this latter to the second device.

### Detailed description:

Herein under is considered a particular embodiment in which the invention method for accessing a service is implemented by, among others, a mobile phone, as first device, in cooperation with a smart card, as token coupled to the first device, and a server.

Within the present description, a token is a smart object that is intended to communicate with the outside world.

The token may be constituted by any electronic medium, such as a Secure Removable Module (or SRM).

The invention does not impose any constraint as to a kind of the token, when present.

As removable token, it may be a smart dongle of the USB (acronym for "Universal Serial Bus") type, a (micro) Secure Digital (or SD) type card or a MultiMedia type Card (or MMC) or any format card to be coupled to a hosting first device.

Alternatively, it may be a fixed token, i.e. a chip that is fixed to a hosting first device.

According to another embodiment, the invention method for accessing a service is implemented by a first device, as standalone entity, in cooperation with a second device. In other words, the first device does not cooperate with any token, so as to access a server issuing data relating to a subscription. According to such an embodiment (not represented), the first device is adapted to carry out the functions carried out by the token and the first device and that are described infra.

The present invention method for accessing a service may be implemented by a token, as second device coupled to a user terminal, as first device, without departing from the scope of the invention.

Naturally, the herein below described embodiment is only for exemplifying purposes and is not considered to reduce the scope of the invention.

Figure 1 shows schematically a system 10 for accessing a service.

Such a system includes a mobile phone 12, as first device 12, a smart card 14, a camera 16, as second device 16, and a remote server 110.

It is to be noted that only one second device 16 is represented for clarity reason. However, it is clear that the server 110 is able to provide a fleet of devices with data relating to a second subscription for accessing from the considered device one or several communication networks.

For sake of simplicity, the mobile phone 12, the smart card 14 and the remote server 110 are termed herein after the phone 12, the token 14 and the server 110 respectively.

Instead of a phone, the first device may be any other device including means for processing data, comprising or being connected to wire, contact-less and/or wireless communication means for sending to and/or receiving data from outside and comprising or being connected to means for storing data.

Within the present description, the adjective "wireless" used within the expression "wireless communication means" signifies notably that the communication means communicates via one or several long range Radio-Frequency (or RF) links.

The long range RF may be fixed at several hundreds of MHz, for instance, around 850, 900, 1800 and/or 1900 MHz.

Within the present description, the adjective "contact-less" used within the expression "contact-less communication means" signifies notably that the communication means communicates via one or several short range RF links.

The short range RF may be related to a Near Field Communication (or NFC) type, Bluetooth type or Wifi type technology. Such a list of technology types is not exhaustive. Such a short range RF link may be used for exchanging data, between the phone 12 and the camera 16, at a short range distance typically up to from around 20 cm (such as with an NFC type technology) until around 800 m (such as with a Bluetooth type technology). The short range RF link may be fixed, for instance, at 13,56 Mhz for NFC with a range up to around 20 cm, at 2,4-2,5 GHz with a range of about 10 m to about 100 m (for Zigbee (e.g. IEEE 802.15.4), Wifi and Bluetooth or Bluetooth low energy (e.g. IEEE 802.15.1)), from around 2,4 GHz to around 10 GHz (for Ultra Wide Band (or UWB) e.g. IEEE 802.15.4a).

The phone 12 is preferably used for accessing a mobile radio-communication network(s) 18.

The mobile radio-communication network(s) 18 may be constituted by a Global Service for Mobiles (or GSM), a General Packet Radio Servce (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

Instead of a mobile radio-communication network(s), it may be constituted by an Internet network accessible, via a contact-less link, like a link of the type Wifi or Bluetooth, through an intermediate entity as an Internet access point.

The phone 12 includes a display screen 122 and a keyboard 124, as Man Machine Interface (or MMI).

Alternatively, instead of a display screen, the phone 12 is equipped with a touch sensitive display screen.

The MMI allows a phone user to interact with the phone 12.

The phone 12 comprises an antenna 126 allowing to communicate data, over one or several mobile radio-communication networks 18, with a server 110 while using a long range RF link(s) 17.

The phone 12 includes data processing means, such as one microprocessor (not represented), data storing means (not represented), as phone memory, and at least one Input/Output (or I/O) interface that are linked all together through a control and data bus (not represented).

The phone microprocessor executes preferably one or several security functions, in order to protect access to information managed through or by the phone 12.

The security functions may include a phone authentication process. The phone authentication process uses preferentially an authentication data generation algorithm to generate data, as password, for authenticating the phone 12. Such a password may be usable only once, as On Time Password (or OTP).

The security functions may include a user authentication process. The user authentication process may be used before reading data, such as notably an identifier relating to the phone 12. The data to be read is stored within either the phone 12 or another entity connected to it, like a token coupled to the phone 12.

The security functions may include an encryption/decryption process to be used before sending to/ after receiving from the server 110 data, so as to protect access to data thus exchanged between the phone 12 and the server 110.

The phone 12 plays, in a preferential manner, a role of a modulator-demodulator (or modem), so as to exchange data with the server 110. The phone 12 carries out the following operations:
- a modulation of an analogical carrier signal to encode digital information to be transmitted, over the antenna 126, to the server 110 (or another entity), and
- a demodulation of a received analogical carrier signal to decode the encoded digital information that is received, over the antenna 126, from the server 110 (or another entity).

The phone 12 (or a contact-less tag (not represented) that is connected to the phone 12) includes notably a contact-less antenna (not represented) and plays, in a preferential manner, a role of a modem, so as to exchange data with the camera 16. The phone 12 (or the contact-less tag) carries out the following operations:
- a modulation of an analogical carrier signal to encode digital information to be transmitted, over the contact-less antenna, to the camera 16; and
- a demodulation of a received analogical carrier signal to decode the encoded digital information that is received, over the contact-less antenna, from the camera 16 (or another entity).

The phone memory, as first memory, may comprise one or several memories, such as a flash memory(ies) and/or a hard disk drive(s).

The phone memory may store a private key relating to the phone 12 and a corresponding public key relating to the phone 12, as private and public phone key respectively. The public phone key may be used, by the server 110, for encrypting data to be sent to the phone 12, so as to protect data thus sent in an encrypted manner. To obtain clear data, the phone 12 has to use the private phone key for decrypting encrypted data received from the server 110.

The phone memory may store a public key relating to the server 110, as public server key corresponding to a private key relating to the server 110, as private server key stored at the server 110 side. The phone 12 may use the public server key for encrypting data to be sent to the server 110. To obtain clear data, the server 110 has to use the private server key for decrypting encrypted data received from the phone 12.

Alternately, instead of two keys, namely a private phone key and a public server key, the first memory stores a symmetric key, as single key, shared with the server 110 to be used for encrypting data to be sent to the server 110 and decrypting data received from the server 110.

The phone memory may store, as signature key, a key for signing data to be sent notably to the server 110. Such a signature allows authenticating (or proving that) a sender of the concerned data is the phone 12. To sign data, the phone 12 uses a predetermined signature algorithm, like a Rivest Shamir Adleman (or RSA) algorithm, and a predetermined signature key that are both stored within the server memory. The signature key is preferably related to the phone 12, as private phone key. The interlocutor, namely the server 110, the token 14 or the second device, verifies corresponding signed data by using a predetermined signature verification algorithm and a predetermined signature verification key that are both stored at the phone interlocutor side. The signature verification key is preferably a public key relating to the phone 12 that has been deduced from the private phone key. According to one particular embodiment, the signature algorithm and the signature verification algorithm are one and the same algorithm, like a Message Authentication Code (or MAC) algorithm while the signature key and the signature verification key constitute one and the same key, as a symmetric key and a key shared between the phone 12 and its interlocutor, namely a fleet of second devices.

The phone memory stores preferably an identifier relating to the phone 12, as first identifier, like an International Mobile Equipment Identity (or IMEI), an Operating System (or OS) and at least one application for managing a provision of data relating to at least one other subscription, termed second subscription.

The phone 12 is preferably coupled to a token 14 that stores, in a secure manner, notably an International Mobile Subscriber Identity (or IMSI), as an identifier relating to a first subscription for accessing from the phone 12 the mobile radio-communication networks 18.

Alternately, instead of being coupled to the token 14, the phone 12 stores, within its memory, data stored within the token 14 as described infra.

The phone I/O interface includes an interface, so as to exchange data with the token 14.

The phone I/O interface with the token 14 may be an International Organization for Standardization (or ISO) 7816 interface, as contact interface when the token 14 is inserted within the phone 12.

According to another embodiment, the token chip is soldered to a Printed Circuit Board (or PCB) of the phone 12, as hosting device.

The phone I/O interface with the token 14 includes preferentially a contact-less interface.

The phone 12 includes or is connected to means for communicating data while using preferably a short range RF link. The short range RF link may be related to any technology type that allows the phone 12 to exchange data with an external device(s), like at least the second device 16.

The token 14, as first token, is associated with or tied to the server 110.

The token 14 belongs to a user.

The token 14 is connected, through a bi-directional contact link 13, to the phone 12.

According to still another embodiment, the token 14 is connected, through a bi-directional contact-less link, i.e. a short range RF link, to the phone 12.

The token 14 includes a chip (not represented).

The token chip includes at least one microprocessor 142, as data processing means, at least one memory 144, as data storing means, and at least one I/O interface 146 that are internally all connected, through an internal bidirectional data bus 143, to each other.

The token I/O interfaces 146 allow communicating data from the internal chip components to the chip exterior and conversely.

The token microprocessor 142 processes, controls and communicates internally data with all the other components incorporated within the chip and, through the I/O interfaces 146, with the chip exterior.

The token microprocessor 142 executes or runs one (or several) application(s).

The token microprocessor 142 is preferably able to initiate actions, in order to interact directly with the outside world, in an independent manner of the phone 12. Such a capacity of interaction at the initiative of the token 14 is also known as proactive capacity. The token 14 is thus able to request the phone 12 to display at the display screen 122 a message, like "please enter a Personal Identity Number" (or PIN). The token 14 is also able to send, at its own initiative, through the phone 12, to any device connected to the phone 12, for instance, a proactive command for sending either a command, like a request for authenticating a subscriber, or information, like a proposed authentication result, sent to the server 110.

The token memory 144 stores preferentially data, as first subscription data, relating to at least one subscription to the mobile radio-communication network(s) 18. The first subscription data allows accessing from the phone 12, as first device, to the mobile radio-communication network(s) 18 and the server 110.

The first subscription data comprises an identifier relating to a first subscription, as subscription identifier and subscriber identity IMS11.

The first subscription data may include a key Ki1 for authenticating the subscriber to the mobile radio-communication network(s) 18 and the server 110, as network authentication key Ki1. The key Ki1 for authenticating the subscriber is associated with the concerned subscriber IMSI1. The key Ki1 for authenticating the subscriber allows authenticating the associated subscriber to the mobile radio-communication network(s) 18.

The first subscription data may include an authentication algorithm, like, for instance, Milenage, to be used, so as to authenticate the concerned subscriber to the mobile radio-communication network(s) 18.

The token memory 144 may store, possibly within the first subscription data, a key Kc1 for encrypting and/or decrypting data. Such a key Kc1 is used for protecting data to be exchanged, in a confidential manner, with an external entity, like the server 110, as token interlocutor. More exactly, such a key Kc1 is used for encrypting data to be sent to an external entity, such as the server 110. The resulting encrypted data is to be decrypted at a receiver side, so as to obtain clear data. Such a key Kc1 is used for decrypting data to be received from an external entity, such as the server 110.

The token memory 144 stores preferably at least one key Ks shared with the server 110. The key Ks may be used as a key for encrypting and/or decrypting data.

The token memory 144 may store data relating to a Uniform Resource Identifier (or URI), a Uniform Resource Locator (or URL) and/or an Internet Protocol (or IP) address of a server 110, as first server to be addressed and that authenticates notably a subscriber to the mobile radio-communication network(s) 18.

The token memory 144 stores one or several Subscriber Identity Module (or SIM) type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet Protocol Multimedia Subsystem (or IMS) Subscriber Identity Module (or ISIM) application.

The SIM type application(s) allows the phone 12 to authenticate to the mobile radio-communication network(s) 18.

To authenticate to the mobile radio-communication network(s) 18, the SIM type application(s) uses preferentially the network authentication key Ki1. The SIM type application(s) also uses preferably, on the one hand, data as challenge that is supplied by a server that attempts to authenticate the subscriber, and, on the other hand, an authentication algorithm, like, for instance, Milenage.

The token microprocessor 142 executes, in a preferred manner, one or several security functions.

The security functions include preferably a user authentication process to be used before accessing the token memory 144. To authenticate the user, the user has to provide a PIN or biometric data, as user reference data, that is stored within the token memory 144. As biometric data, it may include one fingerprint(s), one iris print(s), one voiceprint(s) relating to one authorized user(s).

The security functions include preferentially an encryption/decryption process to be used before sending data to outside/after receiving data from outside, so as to protect access to data managed by or through the token 14. To encrypt data to be sent, the token 14 uses an encryption key and an encryption algorithm, such as an Advanced Encryption Standard (or AES), a Data Encryption Standard (or DES) or the like, that are stored within the token memory 144. To decrypt data to be received, the token 14 may use a decryption key and a decryption algorithm, such as an AES, a DES or the like, that are stored within the token memory 144.

The security functions include preferentially a data signature process to be used before sending data, like an identifier relating to the phone 12 and/or second subscription data, to outside, so as to prove an origin of data originating from the token 14. To sign data, the token 14 uses a predetermined signature algorithm and a predetermined signature key Ks1 that are both stored within the token memory 144. The signature key is preferably related to the token 14, as private key. The interlocutor, namely the server 110 or a second device 16, verifies corresponding signed data by using a predetermined signature verification algorithm and a predetermined signature verification key that are both stored within the interlocutor memory. The signature verification key is preferably a public key relating to the token 14 that has been deduced from the token private key. According to one embodiment, the signature key and the signature verification key constitute one and the same key, as a key shared between the token 14 and its interlocutor(s), namely the server 110 and/or the second device 16.

The camera 16 is a device that needs to address a server, like the server 10, accessible through a second subscription, so as to benefit from one or several services accessible through or by the server.

As service(s), it may comprise a back-up of images or photos, where the photos that are stored originally only at the camera 16 side are also to be stored at a server side thanks to the second subscription.

The camera 16 includes a shutter button 162 to be pushed to capture a photo.

The camera 16 comprises a lens 163 that is used for capturing a photo of a scene situated in front of the lens 163.

The camera 16 includes preferably at least one microprocessor (not represented), as data processing means, at least one memory 164, as data storing means, and at least one I/O interface (not represented) that are internally all connected, through an internal bidirectional data bus (not represented), to each other.

The camera 16 is preferably able to encrypt and/or decrypt data, so as to exchange in a confidential manner with an interlocutor(s), like the server 110.

The camera 16 stores the captured photo into a memory included within or accessible from the camera 16.

The camera 16 includes or is connected to means for communicating data while using preferably a short range RF link, like a link relating to an NFC type, Bluetooth type or Wifi type technology. The short range RF link may be related to any technology type that allows the camera 16 to exchange data with an external device(s), like at least the phone 12.

The camera memory 164 stores preferentially an identifier relating to the camera 16, as second identifier.

Alternatively, instead of a camera memory, the camera is coupled to a device (not represented), like a (second) token, the memory of which stores an identifier relating to the camera 16.

The camera memory 164 stores preferably a private key relating to the camera 16 and a corresponding public key Kc2 relating to the camera 16, as private and public camera key respectively.

Alternatively, instead of a camera memory, the camera is coupled to a device (not represented), like a (second) token, the memory of which stores a private key relating to the device and a corresponding public key relating to the device, as private and public device key respectively.

The public camera (or device) key Kc2 may be used, by the server 110, for encrypting data to be sent to the camera 16 (or a device coupled to the camera 16 respectively), so as to protect data thus sent in an encrypted manner. To obtain clear data, the camera 16 (or a device coupled to the camera 16) has to use the private camera (or device) key for decrypting encrypted data received from the server 110.

Alternately, instead of two keys, namely a private camera (or device) key and a public camera (or device) key, the camera (or device) memory stores a symmetric key Kc2, as single key, shared with the server 110 to be used for encrypting data to be sent to the server 110 and decrypting data received from the server 110.

The camera 16 is able to store into either its memory 164 or a memory relating to a device coupled to the camera 16, data, as second subscription data, relating to a second subscription for accessing from the camera 16 the mobile radio-communication network(s) 18.

The second subscription data includes an identifier relating to a subscriber, like an IMSI2.

The second subscription data may include a key Ki2 for authenticating the concerned subscriber to the mobile radio-communication network(s) 18 and the server 110, as network authentication key Ki2. The key Ki2 for authenticating the subscriber is associated with the concerned subscriber IMSI2. The key Ki2 for authenticating the subscriber allows authenticating the associated subscriber to the mobile radio-communication network(s) 18.

The second subscription data may include an authentication algorithm, like, for instance, Milenage, to be used, so as to authenticate the concerned subscriber to the mobile radio-communication network(s) 18.

The second subscription data may include a key for encrypting and/or decrypting data. Such a key is used for protecting data to be exchanged, in a confidential manner, with an external entity, like the server 110, as second device interlocutor. More exactly, such a key is used for encrypting data to be sent to an external entity, such as the server 110. The resulting encrypted data is to be decrypted at a receiver side, so as to obtain clear data. Such a key is used for decrypting data to be received from an external entity, such as the server 110.

The second subscription data may include at least one key Ks shared with the server 110. The key Ks may be used as a key for encrypting and/or decrypting data.

The second subscription data is to be issued, preferably through the phone 12, from the server 110.

The server 110 to be addressed is identified within either data retrieved from the phone 12 or data stored within the token memory 144.

Alternately, the phone user may be requested to enter, through the phone 12 MMI, a server identifier.

The server 110 may be included within an OTA (acronym for "Over The Air") and/or an OTI (for "Over The Internet") platform(s).

The server 110 constitutes an addressee of a request for sending data relating to at least one second subscription for accessing from at least one device the mobile radio-communication network(s) 18.

The server 110 is connected over a bi-directional wire or contact-less link 19 to at least one mobile radio-communication network 18 and/or an Internet network.

The server 110 plays a role of a provider of second subscription data under the server 110 control, preferably in a secure manner.

The server 110 is hosted by a computer including data processing means, like a microprocessor.

The server 110 is dedicated to running an application for managing a database relating to at least one service and communicating some information included within the database to outside.

The database is also termed back-end database.

The server 110 accesses a memory 114 termed server memory that stores the database.

The server 110 may contain or be connected to the server memory.

The database registers a plurality of subscribers or user accounts. Each subscriber is associated with at least one identifier relating to a subscriber, like a subscriber identity, other identifier(s) relating to a device(s), like a phone identifier and/or a token identifier, at least authentication data relating to an involved device(s), and/or possibly subscriber data.

For a subscriber, several devices, like a phone, as user terminal, and a token associated with the phone, with other related data may be registered within the database.

The server data processing means executes preferably security functions, in order to protect access to information managed through or by the server 110.

The security functions include preferentially an encryption/decryption process to be used before sending data to outside/after receiving data from outside, so as to protect access to data managed through or by the server 110.

The security functions include preferentially a signature verification process. To verify a signature, the server 110 uses a predetermined signature verification algorithm and a predetermined signature verification key that are both stored within the server memory. According to one particular embodiment, the signature algorithm and the signature verification algorithm are one and the same algorithm, like a MAC algorithm while the signature key and the signature verification key constitute one and the same key, as a symmetric key and a key shared between the phone 12 or the token 14 and the server 110.

To encrypt data to be sent, the server 110 uses a key that is stored within the server memory and an encryption algorithm, like Milenage, an AES, a DES or the like. To decrypt data to be received, the server 110 uses a key that is stored within the server memory and a decryption algorithm, such as Milenage, an AES, a DES or the like.

The server 110 may have generated, for each subscriber, subscription data, before any connection of a device to be registered for the concerned user or just after.

Alternately, another server (not represented) or entity connected to the server 110 is dedicated to generate subscription data only when the server 110 authorizes to issue it and requests it to the connected server or entity. According to such an alternative, the server 110 is able to delegate to another server or entity connected to the server 110 such a task or operation of generation of subscription data.

The database may associate, for each subscriber, at least one public or shared key relating to each device, like at least the phone 12 and/or the token 14, that is registered for the concerned user. For instance, one public key relating to the token 14 is to be used, by the server 110, for encrypting data to be sent to the phone 12, so as to protect data thus transmitted.

The server memory stores preferably a private server key and a corresponding public server key. The public server key is to be used, by any device, like the camera 16, for encrypting data to be sent to the server 110 and all other devices associated with the other subscribers managed by the server 110.

Alternatively, the server memory stores a shared key to be used, by any device, like the token 14, and the server 110 for encrypting data to be sent to the server 110 and to the device respectively and all other devices associated with the subscriber managed by the server 110.

The server memory stores preferably rules for accessing the service managed by the server 110.

The rules for accessing the service may encompass, for each subscriber, a user profile(s) that is(are) eligible for accessing one or several services managed by or through the server 110.

The rules for accessing the service are taken into account so as to forbid or authorize access to the concerned service.

The server 110 may be operated by either a mobile radio-communication network operator or on its behalf, a bank operator and/or a service provider.

The server 110 is preferentially arranged to check whether data received from a requesting device(s) connected to the server 110 does or does not match expected data for authenticating the device(s) prior to sending data, like notably subscription data.

The server 110 may be able to manage a white device list, as device(s) which is(are) authorized to be an interlocutor(s), as second device, for accessing one or several services managed by or through the server 110, and/or a black device list, as device (s) which is(are) forbidden to be an interlocutor(s) for accessing one or several services managed by or through the server 110.

The server 110 may be further able to analyze whether corresponding identified second subscription data does or does not allow the requesting device(s), like the camera 16, to access a managed service.

Figure 2 depicts an exemplary embodiment of a message flow 20 that involves notably the phone 12, as requesting device, the token 14, the camera 16 and the server 110.

In the explained example, it is assumed that the token 14 is coupled to the phone 12. The token user desires to obtain for the camera 16, as second device, data, as second subscription data, relating to one second subscription for accessing from the camera 16 the mobile radio-communication network(s) 18.

To obtain the second subscription data, it is assumed that the phone 12 supports a target application for managing a provision of data relating to at least one second subscription involving the token 14 for all security functions as described infra.

Alternately, instead of addressing a token, the phone 12 carries out the security functions.

First of all, the token user has been authenticated preferably by the token 14 while submitting expected data, like a PIN or biometric data, stored within the token memory 144.

It is assumed that the phone display screen 122 displays a list of application(s) offered from the phone 12 including the target application.

Firstly, the phone user selects, through the phone 12 MMI, the target application, so that the camera 16 receives second subscription data.

The phone 12 launches an execution of the selected target application.

The phone 12 sends to the token 14 a message 22 for requesting first subscription data stored within the token memory 144.

The token 14 sends back to the phone 12 a message 24 including the first subscription data that comprises a subscriber identity IMSI1.

The phone 12 sends to the camera 16 a message 26 for requesting an identifier relating to the camera 16, as second identifier, and preferably a key for encrypting data stored within either the camera memory 164 or a memory of a token coupled to the camera 16.

The camera 16 sends back to the phone 12 a message 28 including the second identifier and preferably the key Kc2 for encrypting data.

Preferably, the phone 12 retrieves an IMEI, as identifier relating to the phone 12 and first identifier, stored within the phone memory.

Preferably, prior to sending data to the server 110, the phone 12 sends to the token 14 a request (not represented) for signing data to be sent accompanied with the data to be sent. The data to be sent includes the first identifier IMEI, the subscriber identity IMSI1 and the second identifier. The token 14 signs the data to be sent by using a key Ks1 for signing data and sends back to the phone 12 the data to be sent signed by the token 14.

Preferably, prior to sending data to the server 110, the phone 12 sends to the token 14 a request (not represented) for encrypting data to be sent accompanied with the data to be sent. The data to be sent includes the first identifier IMEI, the subscriber identity IMSI1 and the second identifier. The token 14 encrypts the data to be sent by using a key for encrypting data. The key for encrypting data is either a public key relating to the server 110 or a shared key stored within the token memory 144 and the server memory 114.

The phone 12 sends to the server 110 a message 210, like a Short Message Service (or SMS) message and/or an email, comprising a request for receiving second subscription data accompanied with data, like notably an identifier relating to phone 12, as first identifier, the second identifier and the subscriber identity IMSI1 and preferably the key Kc2 for encrypting data that have all been previously preferably encrypted and/or signed by the token 14.

Optionally, the server 110 carries out a data decryption on the received encrypted data by using either a private key relating to the server 110 or the shared key stored within the token memory 144 and the server memory 114.

Optionally, the server 110 carries out a signature verification on the received signed data by using a predetermined signature verification key stored within the server memory 114.

Preferably, the server 110 authenticates the subscriber while addressing, as known per se, the token 14.

Once the server 110 has received the first identifier, the second identifier and the subscriber identity IMSI1, the server 110 retrieves the concerned registered subscriber within the server memory.

When the server 110 identifies preferably that the second device is authorized to access second subscription data and the user is eligible, the server 110 generates or lets another entity connected to the server 110 generate corresponding second subscription data.

Once generated, the server 110 stores the second subscription data while associating preferably it with the second identifier.

Optionally, the server 110 carries out a data encryption on the data to be sent to the camera 16 by using preferably the received key Kc2 for encrypting data and/or a shared key stored within the token memory 144 and the server memory 114.

The server 110 sends preferably to the phone 12 a message 212, such as one or several SMS message and/or an email(s), comprising second subscription data that is preferably previously encrypted.

Alternately, instead of sending the last message 212 to the phone 12, the server 110 sends directly a message comprising second subscription data that is preferably previously encrypted by using the received key Kc2 for encrypting data.

Optionally, the phone 12 requests the token 14 to carry out a data decryption on the received encrypted data by using preferably a shared key stored within the token memory 144 and the server memory 114. Then, the token 14 sends to the phone 12 the received data in a decrypted manner.

Then, the phone 12 sends to the camera 16, possibly after a data decryption, a message 214 comprising second subscription data that is preferably previously encrypted by using the received key Kc2 for encrypting data.

Optionally, the camera 16 carries out a data decryption on the received encrypted data by using the received key Kc2 for encrypting data or a corresponding private key stored within the camera memory 164.

Then, the camera 16 stores into the camera memory 16 the second subscription data. The second subscription data includes a subscriber identifier IMSI2 and preferably a network authentication key Ki2.

The invention solution allows adding an attachment to the mobile communication network(s) 18 without needing to involved a person of a mobile operator.

The invention solution may be secure while authenticating the first device 12, the user and/or the token 14 and/or exchanging data in a confidential manner.

Thus, the invention solution facilitates an enrolment of new connected device(s) for a user who has already subscribed to a server.

The embodiment that has just been described is not intended to limit the scope of the concerned invention. Other embodiments may be given. As another embodiment example, instead of exchanging with a remote server, the phone or the token 14 exchanges, over a contactless RF link, with a local entity, like a local server.

## Claims

1. A method (20) for accessing a service,
**characterized in that**, a first device (12) comprising or accessing a first memory, the first memory storing an identifier, as first identifier, the first memory storing data relating to at least one first subscription for accessing from the first device at least one communication network, as first subscription data, each of at least one second device (16) comprising or accessing a second memory, the second memory storing an identifier, as second identifier, the method comprises the following steps:
- each of the at least one second device sends to the first device the second identifier (28);
- the first device sends, thanks to the first subscription data, to a server (110) the first identifier and at least the second identifier (210) ;
- the server sends to the first device data (212) relating to at least one second subscription for accessing from the at least one second device the at least one communication network, as second subscription data; and
- the first device sends to the at least one second device the at least one second subscription data (214).

2. Method according to claim 1, wherein, prior to a sending of the first identifier and the second identifier to the server, the method further includes a first encryption step in which the first device or a first token (14) coupled to the first device encrypts the first identifier and the second identifier by using a first key.

3. Method according to claim 1 or 2, wherein, prior to a sending of the first identifier and the second identifier to the server, the method further includes a signature step in which the first device or a first token coupled to the first device signs the first identifier and the second identifier.

4. Method according to any previous claim, wherein, prior to a sending of the first identifier and the second identifier to the server, the method further includes a second key getting step in which the at least one second device or at least one second token coupled to each second device sends, to the first device or a first token coupled to the first device, a key for encrypting data, said second key, and the first device or the first token sends to the server the second key.

5. Method according to claim 4, wherein, prior to a sending of the second subscription data to the first device or the first token, the method further includes a server encryption step in which the server encrypts the second subscription data by using the second key or a key relating to the second key.

6. Method according to claim 5, wherein the method further includes a second subscription data forwarding step in which the first device or the first token sends to the at least one second device or the at least one second token encrypted second subscription data.

7. Method according to claim 6, wherein the method further includes a second decryption step in which the at least one second device or the at least one second token decrypts encrypted second subscription data by using a third key.

8. Method according to any previous claim, wherein the method further includes a user authentication step in which the first device or a first token coupled to the first device authenticates a user.

9. Method according to any previous claim, wherein the at least one second device or at least one second token coupled to each of the at least one second device stores the second subscription data, the second subscription data including at least one subscription identifier and possibly a key for accessing the at least one communication network, said fourth key.

10. A system (10) for accessing a service,
**characterized in that** the system comprises a first device (12) and at least one second device (16), the first device comprising or accessing a first memory, the first memory storing an identifier, as first identifier, the first memory storing data relating to at least one first subscription for accessing from the first device at least one communication network, as first subscription data, each of the at least one second device comprising or accessing a second memory (164), the second memory storing an identifier, as second identifier,
**in that** each of the at least one second device is adapted to send to the first device the second identifier;
**in that** the first device is adapted to send, thanks to the first subscription data, to a server the first identifier and at least the second identifier (210);
**in that** the server is adapted to send to the first device data (212) relating to at least one second subscription for accessing from at least the second device the at least one communication network, as second subscription data; and
**in that** the first device is adapted to send to the at least one second device the at least one second subscription data (214).
